# EUROPEAN PATENT APPLICATION

(11) **EP 1 541 593 A1**
(43) Date of publication of application: **15.06.2005**
(21) Application number: 03738548.1
(22) Date of filing: 27.06.2003
(51) Int. Cl.: C08F 4/54, C08F 36/04

(54) **CATALYST COMPOSITION**

(30) Priority: 27.06.2002 JP 2002187957
(71) Applicant: RIKEN, Wako-shi, Saitama 351-0198 (JP)
(72) Inventor: Kaita, Shojiro, Wako-shi, Saitama 351-0198 (JP); Hou, Zhaomin, Wako-shi, Saitama 351-0198 (JP); Wakatsuki, Yasuo, Wako-shi, Saitama 351-0198 (JP); Doi, Yoshiharu, Wako-shi, Saitama 351-0198 (JP)
(74) Representative: Gervasi, Gemma, Dr.
(86) International application number: PCT/JP2003/008185
(87) International publication number: WO 2004/003022

(57) **Abstract**

The present invention relates to a catalyst composition for polymerization of a conjugated diene, comprising:
(A) a metallocene-type complex of a rare earth metal compound;
(B) aluminoxane; and
(C) a combination of two or more organometallic compounds of group I to group III elements in a periodic table.

The present invention provides a catalyst composition for polymerization, for efficiently producing polymers each having a high cis-1,4-configuration content in microstructure, an appropriate molecular weight for easy processing, and a narrow molecular weight distribution.

## Description

### Technical Field

The present invention relates to a catalyst composition for polymerization of a conjugated diene. Further, the present invention relates to a production method for a conjugated diene polymer using the catalyst composition and to a novel conjugated diene polymer obtained through the production method.

### Background Art

Various proposals have been made so far on polymerization catalysts for conjugated dienes, and the polymerization catalysts play a very important role in industrial fields. In particular, various polymerization catalysts which provide a high cis-1,4-linkage content have been studied and developed to obtain conjugated diene polymers with enhanced performance in thermal and mechanical characteristics. For example, complex catalyst systems containing as a main component a compound of a transition metal such as nickel, cobalt, and titanium are known, and some of them have already been widely used in industrial applications as polymerization catalysts for butadiene, isoprene, etc. (see, End. Ing. Chem., 48, 784, 1956; JP 37-008198 B).

On the other hand, in order to attain a higher cis-1,4-linkage content and superior polymerization activity, complex catalyst systems which consist of a rare earth metal compound and an organometallic compound containing a group I to group III element have been studied and developed, and highly stereospecific polymerization has been studied actively (see, Makromol. Chem. Suppl., 4, 61, 1981; J. Polym. Sci., Polym. Chem. Ed., 18, 3345, 1980; DE 2,848,964; Sci. Sinica., 2/3, 734, 1980; Rubber Chem. Technol., 58, 117, 1985, etc.). Among those catalyst systems, complex catalysts containing as main components a neodymium compound and an organoaluminum compound were revealed to provide a high cis-1,4-linkage content and have superior polymerization activity. The catalysts have already been used in industrial applications as polymerization catalysts for butadiene, etc. (see, Macromolecules, 15, 230, 1982; Makromol. Chem., 94, 119, 1981).

With the recent progress of industrial technologies, requirements for polymeric materials as commercial products have become increasingly higher, and development of polymeric materials having still higher thermal characteristics (thermal stability, etc.) and mechanical characteristics (tensile modulus, bending modulus, etc.) has been desired strongly. As one of promising means for achieving the obj ect, attempts have been made to produce a polymer having a high cis-1,4-configuration content in microstructure and a narrow molecular weight distribution by using a catalyst having a high polymerization activity to conjugated dienes.

The inventors of the present invention have found that: conjugated dienes can be efficiently polymerized by using a catalyst composition including a rare earth metal metallocene-type polymerization catalyst and a co-catalyst containing an ionic compound composed of a non-coordinating anion and a cation, and/or an aluminoxane in combination; and a conjugated diene polymer having an extremely high cis-1,4-configuration content in microstructure and a narrow molecular weight distribution can be produced by using the aforementioned catalyst composition for polymerization (see, JP 2000-313710 A). Further, the inventors of the present invention have found a catalyst composition for polymerization having a particularly excellent polymerization activity among the aforementioned catalyst compositions for polymerization (see, Japanese Patent Application No. 2002-094681).

The inventors of the present invention have found that a conjugated diene polymer having an extremely high cis-1, 4-configuration content in microstructure and an appropriate molecular weight for easy processing can be produced by using a polymerization catalyst prepared by mixing: a rare earth metal metallocene-type polymerization catalyst; an organometallic compound of at least one of element selected from group IA to group IIIA (group 1 to group 3) elements and group IB to group IIIB elements (group 11 to group 13) elements in a periodic table; and an aluminoxane and/or a reaction product of an organoaluminum compound and water (see, Japanese Patent Application No. 2000-384771).

However, development of a production method for a conj ugated diene polymer having a still higher cis-1,4-configuration content in microstructure, an appropriate molecular weight for easy processing, and a narrow molecular weight distribution has been desired.

Further, the development of a method allowing polymerization with a smaller amount of a catalyst has been desired from problems of production cost and the like.

### Disclosure of the Invention

An object of the present invention is to provide a catalyst for polymerization of a conjugated diene. In particular, the obj ect of the present invention is to provide a catalyst composition for polymerization, for producing polymers each having a high cis-1,4-configuration content in microstructure, an appropriate molecular weight for easy processing, and a narrow molecular weight distribution. Another obj ect of the present invention is to provide a catalyst composition for polymerization with high polymerization efficiency, for producing polymers each having the aforementioned characteristics. Further, still another object of the present invention is to provide polymers each having the aforementioned characteristics, and a production method for such polymers.

The inventors of the present invention have conducted various intensive studies to achieve the foregoing objects. As a result, the inventors of the present invention have found that: conjugated dienes can be efficiently polymerized by using a catalyst composition including a rare earth metal metallocene-type polymerization catalyst and a co-catalyst containing aluminoxane and a combination of two or more organometallic compounds of group I to group III elements in a periodic table; and a conjugated diene polymer having an extremely high cis-1,4-configuration content in microstructure, an appropriate molecular weight for easy processing, and a narrow molecular weight distribution can be produced by using the aforementioned catalyst composition for polymerization. The present invention was achieved based on these findings.

The present invention thus provides a catalyst composition for polymerization of a conjugated diene, which includes the following components: (A) a metallocene-type complex of a rare earth metal compound; (B) aluminoxane; and (C) a combination of two or more organometallic compounds of group I to group III elements in a periodic table. According to preferred modes of the present invention, there are provided: the aforementioned catalyst composition in which the metallocene-type complex is a samarium complex; the aforementioned catalyst composition in which the organometallic compounds of group I to group III elements in aperiodic table are organoaluminum compounds; the aforementioned catalyst composition in which the combination of two or more organometallic compounds of group I to group III elements in a periodic table is a combination of one or two or more metal alkyl compounds and one or two or more metal alkyl hydrides; the aforementioned catalyst composition in which the combination of two or more organometallic compounds of group I to group III elements in a periodic table is a combination of triisobutylaluminum and diisobutylaluminum hydride; and the aforementioned catalyst composition further including an ionic compound composed of a non-coordinating anion and a cation; and a co-catalyst used along with a polymerization catalyst for a conjugated diene containing a metallocene-type complex of a rare earth metal compound, including: aluminoxane; and a combination of two or more organometallic compounds of group I to group III elements in a periodic table.

From another perspective of the present invention, there are provided: a production method for a conjugated diene, including polymerizing a conjugated diene in the presence of the aforementioned catalyst composition; and a polymer which can be obtained by polymerization of a conjugated diene in the presence of the aforementioned catalyst composition. In addition, there is also provided a polymer having: a cis-1,4-configuration content in microstructure of the polymer of 80.0 mol% or more, preferably 90.0 mol% or more, more preferably 95.0 mol% or more, and most preferably 98.5 mol% or more; a number average molecular weight of 100,000 to 500,000, preferably 150, 000 to 450,000, more preferably 200, 000 to 400, 000, and most preferably 250,000 to 350, 000; and a molecular weight distribution Mw/Mn of 2.50 or less, preferably 2.20 or less, and more preferably 2.00 or less. This polymer can be produced by polymerizing a conjugateddiene in the presence of the aforementioned catalyst composition for polymerization.

### Best Mode for carrying out the Invention

A metallocene-type complex of a rare earth metal compound of the present invention includes a divalent or trivalent rare earth metal compound represented by the general formula (I): RₐMX_{b}·L_{c} or the general formula (II) : RₐMX_{b}QX_{b} (where, M represents a rare earth metal; R represents a cyclopentadienyl group, a substituted cyclopentadienyl group, an indenyl group, a substituted indenyl group, a fluorenyl group, or a substituted fluorenyl group; X represents a hydrogen atom, a halogen atom, an alkoxide group, a thiolate group, an amide group, or a hydrocarbon group having 1 to 20 carbon atoms; L represents a Lewis basic compound; Q represents a group III element in a periodic table; "a" represents an integer of 1, 2, or 3; "b" represents an integer of 0, 1, or 2; and "c" represents an integer of 0, 1, or 2).

When "a" is 2 or 3 in the general formula (I), two or three Rs may be the same or different. Further, when "b" or "c" is 2, each of two Xs or each of two Ls may be the same or different.

In the aforementioned general formula (I), an element selected from those of atomic numbers 57 to 71 in the periodic table can be used as the rare earth metal represented by M. Specific examples of the rare earth metal include lanthanum, cerium, praseodymium, neodymium, promethium, samarium, europium, gadolinium, terbium, dysprosium, holmium, erbium, thulium, ytterbium, and lutetium. Of those, samarium is preferred.

The type, number, and substitution position of asubstituent (s) of the substituted cyclopentadienyl group, the substituted indenyl group, or the substituted fluorenyl group represented by R are not particularly limited. Examples of the substituent(s) include a methyl group, an ethyl group, an n-propyl group, an isopropyl group, an n-butyl group, an isobutyl group, a sec-butyl group, a tert-butyl group, a hexyl group, a phenyl group, a benzyl group, and a hydrocarbon group containing a silicon atom(s) such as a trimethylsilyl group. R may be bonded to a part of X through a crosslinking group such as a dimethylsilyl group, a dimethylmethylene group, a methylphenylmethylene group, a diphenylmethylene group, an ethylene group, and a substituted ethylene group. Two Rs may be bonded to each other through a crosslinking group such as a dimethylsilyl group, a dimethylmethylene group, a methylphenylmethylene group, a diphenylmethylene group, an ethylene group, and a substituted ethylene group.

Specific examples of the substituted cyclopentadienyl group include a methylcyclopentadienyl group, a benzylcyclopentadienyl group, a vinylcyclopentadienyl group, a 2-methoxyethylcyclopentadienyl group, a trimethylsilylcyclopentadienyl group, a tert-butylcyclopentadienyl group, an ethylcyclopentadienyl group, a phenylcyclopentadienyl group, a 1,2-dimethylcyclopentadienyl group, a 1,3-dimethylcyclopentadienyl group, a 1,3-di(tert-butyl)cyclopentadienyl group, a 1,2,3-trimethylcyclopentadienyl group, a 1,2,3,4-tetramethylcyclopentadienyl group, a pentamethylcyclopentadienyl group, a 1-ethyl-2,3,4,5-tetramethylcyclopentadienyl group, a 1-isopropyl-2,3,4,5-tetramethylcyclopentadienyl group, a 1-n-butyl-2,3,4,5-tetramethylcyclopentadienyl group, a 1-trimethylsilyl-2,3,4,5-tetramethylcyclopentadienyl group, a 1-benzyl-2,3,4,5-tetramethylcyclopentadienyl group, a 1-phenyl-2,3,4,5-tetramethylcyclopentadienyl group, a 1-trifluoromethyl-2,3,4,5-tetramethylcyclopentadienyl group, a 1-isobutyl-2,3,4,5-tetramethylcyclopentadienyl group, a 1-triethylsilyl-2,3,4,5-tetramethylcyclopentadienyl group, and a 1-triisopropylsilyl-2,3,4,5-tetramethylcyclopentadienyl group. Specific examples of the substituted indenyl group include a 1,2,3-trimethylindenyl group, a heptamethylindenyl group, and a 1,2,4,5,6,7-hexamethylindenyl group. The substituted cyclopentadienyl group is preferred as R, and specifically, preferred examples of the substituted cyclopentadienyl group include a 1-ethyl-2,3,4,5-tetramethylcyclopentadienyl group, a 1-isopropyl-2,3,4,5-tetramethylcyclopentadienyl group, a 1-n-butyl-2,3,4,5-tetramethylcyclopentadienyl group, and a 1-trimethylsilyl-2,3,4,5-tetramethylcyclopentadienyl group.

The alkoxide group represented by X may be any of an aliphatic alkoxy group such as a methoxy group, an ethoxy group, a propoxy group, an n-butoxy group, an isobutoxy group, a sec-butoxy group, or a tert-butoxy group; and an aryl oxide group such as a phenoxy group, a 2, 6-di-tert-butylphenoxy group, a 2, 6-diisopropylphenoxy group, a 2,6-dineopentylphenoxy group, a 2-tert-butyl-6-isopropylphenoxy group, a 2-tert-butyl-6-neopentylphenoxy group, or a 2-isopropyl-6-neopentylphenoxy group. Of those, a 2,6-di-tert-butylphenoxy group is preferred.

The thiolate group represented by X may be any of an aliphatic thiolate group such as a thiomethoxy group, a thioethoxy group, a thiopropoxy group, a thio-n-butoxy group, a thioisobutoxy group, a thio-sec-butoxy group, or a thio-tert-butoxy group; and an aryl thiolate group such as a thiophenoxy group, a 2,6-di-tert-butylthiophenoxy group, a 2,6-diisopropylthiophenoxy group, a 2, 6-dineopentylthiophenoxy group, a 2-tert-butyl-6-isopropylthiophenoxy group, a 2-tert-butyl-6-thioneopentylphenoxy group, a 2-isopropyl-6-thioneopentylphenoxy group, or a 2,4,6-triisopropylthiophenoxy group. Of those, a 2,4,6-triisopropylthiophenoxy group is preferred.

The amido group represented by X may be any of an aliphatic amido group such as a dimethylamido group, a diethylamido group, or a diisopropylamido group; and an arylamido group such as a phenylamido group, a 2,6-di-tert-butylphenylamido group, a 2,6-diisopropylphenylamido group, a 2,6-dineopentylphenylamido group, a 2-tert-butyl-6-isopropylphenylamido group, a 2-tert-butyl-6-neopentylphenylamido group, a 2-isopropyl-6-neopentylphenylamido group, or a 2,4,6-tert-butylphenylamido group. Of those, a 2,4,6-tert-butylphenylamido group is preferred.

The halogen atom represented by X may be any of a fluorine atom, a chlorine atom, a bromine atom, or an iodine atom. Of those, a chlorine atom and an iodine atom are preferred.

Specific examples of the hydrocarbon group having 1 to 20 carbon atoms represented by X include linear or branched aliphatic hydrocarbon groups such as a methyl group, an ethyl group, an n-propyl group, an isopropyl group, an n-butyl group, an isobutyl group, a sec-butyl group, a tert-butyl group, a neopentyl group, a hexyl group, and an octyl group; aromatic hydrocarbon groups such as a phenyl group, a tolyl group, and a naphthyl group; aralkyl groups such as a benzyl group; hydrocarbon groups each containing a silicon atom(s) such as a trimethylsilylmethyl group and a bistrimethylsilylmethyl group; and hydrocarbon groups each containing an oxygen atom(s) such as a furyl group and a tetrahydrofuryl group. Of those, a methyl group, an ethyl group, an isobutyl group, a trimethylsilylmethyl group, a tetrahydrofuryl group, and the like are preferred.

A hydrogen atom, a halogen atom, or a hydrocarbon group having 1 to 20 carbon atoms is preferred as X.

The Lewis base compound represented by L is not particularly limited as long as the compound can coordinate to a metal by means of an electron pair, and the compound may be any of an inorganic compound and an organic compound. Examples of the Lewis base compound include but are not limited to ether compounds, ester compounds, ketone compounds, amine compounds, phosphine compounds, and silyloxy compounds.

In the general formula (II), Q represents a group III (group IIIA and group IIIB) element in aperiodic table, and specific examples thereof include boron, aluminum, and gallium. Of those, aluminum is preferred.

Specific examples of the metallocene-type complex of a rare earth metal compound represented by the formula (I) include bis[pentamethyl cyclopentadienyl](bistetrahydrofuran)samarium, methylbis[pentamethyl cyclopentadienyl](tetrahydrofuran)samarium, chlorobis[pentamethyl cyclopentadienyl](tetrahydrofuran)samarium, iodobis[pentamethyl cyclopentadienyl](tetrahydrofuran)samarium, bis[tetramethyl(ethyl) cyclopentadienyl](bistetrahydrofuran) samarium, bis[tetramethyl(isopropyl)cyclopentadienyl](tetrahydrofuran) samarium, bis[tetramethyl (n-butyl)cyclopentadienyl](bistetrahydrofuran) samarium, and bis [tetramethyl(trimethylsilyl)cyclopentadienyl](tetrahydrofuran) samarium. A specific example of the metallocene-type complex of a rare earth metal compound represented by the formula (II) includes dimethylaluminum(µ-dimethyl)bis[pentamethyl cyclopentadienyl]samarium.

The aluminoxane used as the co-catalyst may be obtained by contacting an organoaluminum compound with a condensation agent. More specific examples thereof include a linear aluminoxane and a cyclic aluminoxane represented by the general formula (-Al(R')O-)ₙ. In the formula, R' represents a hydrocarbon group having 1 to 10 carbon atoms, and the hydrocarbon group may be substituted with a halogen atom and/or an alkoxy group. The symbol "n" represents degree of polymerization, and "n" is preferably 5 or more, more preferably 10 or more. Examples of R' include a methyl group, an ethyl group, a propyl group, and an isobutyl group, and a methyl group is preferred. Examples of the organoaluminum compound used as a raw material of the aluminoxane include trialkylaluminum such as trimethylaluminum, triethylaluminum, or triisobutylaluminum; and mixtures thereof. Methylaluminoxane produced by using trimethylaluminum as a raw material is particularly preferred. A modified methylaluminoxane produced by using a mixture of trimethylaluminum and triisobutylaluminium as a raw material can also be suitably used. A commercially available aluminoxane such as MMAO sold by Tosoh Finechem Corporation may also be used. The aluminoxane may be used alone, or two or more thereof may be used in combination. Further, the aluminoxane used as a co-catalyst may be used alone or in combination with an ionic compound.

An ionic compound may be used in combination with the aluminoxane as the co-catalyst. The ionic compound used as a co-catalyst is not particularly limited as long as the compound is composed of a non-coordinating anion and a cation. Examples thereof include ionic compounds that can react with the aforementioned rare earth metal compounds to form a cationic transition metal compound. Examples of the non-coordinating anion include tetra(phenyl)borate, tetrakis(monofluorophenyl)borate, tetrakis(difluorophenyl)borate, tetrakis(trifluorophenyl)borate, tetrakis(trifluorophenyl)borate, tetrakis(pentafluorophenyl)borate, tetrakis(tetrafluoromethylphenyl)borate, tetra(tolyl)borate, tetra(xylyl)borate, (triphenyl, pentafluorophenyl)borate, [tris(pentafluorophenyl), phenyl]borate, and tridecahydride-7,8-dicarbaundecaborate.

Examples of the cation include a carbonium cation, an oxonium cation, an ammonium cation, a phosphonium cation, a cycloheptatrienyl cation, and a ferrocenium cation containing a transitionmetal. Specific examples of the carbonium cation include a trisubstituted carbonium cation such as a triphenylcarbonium cation and a trisubstituted phenylcarbonium cation. Specific examples of the trisubstituted phenylcarbonium cation include a tri(methylphenyl)carbonium cation and a tri(dimethylphenyl)carbonium cation. Specific examples of the ammonium cation include a trialkylammonium cation such as a trimethylammonium cation, a triethylammonium cation, a tripropylammonium cation, a tributylammonium cation, or a tri (n-butyl) ammonium cation; an N, N-dialkylanilinium cation such as an N,N-diethylanilinium cation or an N,N-2,4,6-pentamethylanilinium cation; and a dialkylammonium cation such as a di(isopropyl)ammonium cation or a dicyclohexylammonium cation. Specific examples of the phosphonium cation include a triarylphosphonium cation such as a triphenylphosphonium cation, a tri(methylpheny)phosphonium cation, or a tri(dimethylphenyl)phosphonium cation.

A compound prepared by arbitrarily selecting a non-coordinating anion and a cation and combining the two can be preferably used as the ionic compound. Preferred examples of the ionic compound include triphenylcarbonium tetrakis(pentafluorophenyl)borate, triphenylcarbonium tetrakis(tetrafluorophenyl)borate, N,N-dimethylanilinium tetrakis(pentafluorophenyl)borate, and 1,1'-dimethylferrocenium tetrakis(pentafluorophenyl)borate. The ionic compound may be used alone, or two or more thereof may be used in combination. Examples of a Lewis acid that reacts with a transition metal compound to form a cationic transition metal compound include B(C₆F₅)₃ and Al(C₆F₅)₃. The acid may be used in combination with the aforementioned ionic compound.

The catalyst composition of the present invention comprises a combination of two or more organometallic compounds of group I to group III(group IA to group IIIA and group IB to group IIIB) elements in a periodic table as the co-catalyst. Examples of the organometallic compound of group I to group III elements in a periodic table include an organoaluminum compound, an organolithium compound, an organomagnesium compound, an organozinc compound, and an organoboron compound. Preferred example of the organometallic compound is a metal alkyl compound. More specific examples thereof that may be used include methyllithium, butyllithium, phenyllithium, benzyllithium, neopentyllithium, (trimethylsilyl)methyllithium, bis(trimethylsilyl)methyllithium, dibutylmagnesium, dihexylmagnesium, diethylzinc, dimethylzinc, trimethylaluminum, triethylaluminum, triisobutylaluminium, trihexylaluminium, trioctylaluminium, and tridecylaluminium. Furthermore, an organometallic halide wherein a part of alkyl group thereof is substituted with a halogen atom may be also preferably used. Specific examples thereof that may be used include ethylmagnesium chloride, butylmagnesium chloride, dimethylaluminum chloride, diethylaluminum chloride, ethylaluminum sesquichloride, or ethylaluminum dichloride. Stillfurther, an organometallic hydride wherein a part of alkyl group thereof is substituted with a hydrogen atom may be also preferably used. Specific examples thereof that may be used include diethylaluminum hydride, diisobutylaluminum hydride or ethylaluminum sesquihydride. Of these, the aluminum compound is preferred as the co-catalyst of the present invention.

Two or more organometallic compounds are used in combination as the co-catalyst of the present invention. A preferable example of the combination of the organometallic compounds includes a combination of one or two or more metal alkyl compounds and one or two or more metal alkyl hydrides. A more specific preferable example thereof includes a combination of triisobutylaluminum and diisobutylaluminum hydride.

A mixing ratio of the components (A) the metallocene-type complex of a rare earth metal compound, (B) aluminoxane, and (C) the combination of two or more organometallic compounds of group I to group III elements in a periodic table in the catalyst composition of the present invention may be arbitrarily selected depending on the type of a monomer to be polymerized, and the type and conditions of a reaction. A ratio of the component (A) to the component (B) (molar ratio; moles of a rare earth metal in the metallocene-type complex : moles of an aluminum metal in aluminoxane) is generally about 1 : 1 to 1 : 10,000, preferably about 1 : 10 to 1 : 1,000, and more preferably about 1 : 50 to 1 : 500. A ratio of the component (A) to the component (C) (molar ratio) is about 1 : 1 to 1 : 10,000, preferably about 1 : 10 to 1 : 1,000, and more preferably about 1 : 50 to 1 : 500.

Two or more organometallic compounds of the component (C) are used in combination. The organometallic compounds of the component (C) preferably contain one or two or more metal alkyl compounds as a primary component, and one or two or more metal alkyl hydrides, metal alkyl halides, or the like as other components. The organometallic compounds of the component (C) more preferably contain one or two or more metal alkyl compounds as a primary component, and one or two or more metal alkyl hydrides as other components. The mixing ratio (molar ratio) of the primary component to the other components is about 1 : 0.001 to 1 : 1,000, preferably about 1 : 0.02 to 1 : 500, and more preferably about 1 : 0.05 to 1 : 200, for example.

The type of the conjugated diene compound as a monomer that can be polymerized through the polymerization method of the present invention is not particularly limited. Examples of the monomer include 1,3-butadiene, isoprene, 1,3-pentadiene, 2-ethyl-1,3-butadiene, 2,3-dimethylbutadiene, 2-methylpentadiene, 4-methylpentadiene, and 2,4-hexadiene. Of those, 1, 3-butadiene is preferred. The monomer component may be used alone, or two or more thereof may be used in combination.

The mixing ratio of the polymerization catalyst of the present invention to the monomer (a weight of the monomer (g) / moles of the polymerization catalyst (mmol)) is 100 or more, preferably 3,000 or more, and more preferably 5,000 or more.

The polymerization method of the present invention may be performed either in the presence or absence of a solvent. When a solvent is used, the type of the solvent is not particularly limited as long as the solvent is substantially inactive in the polymerization reaction and has sufficient solubility of the monomer and the catalyst composition therein. Examples of the solvent include saturated aliphatic hydrocarbons such as butane, pentane, hexane, and heptane; saturated cycloaliphatic hydrocarbons such as cyclopentane and cyclohexane; monoolefins such as 1-butene and 2-butene; aromatic hydrocarbons such as benzene and toluene; halogenated hydrocarbons such as methylene chloride, chloroform, carbon tetrachloride, trichloroethylene, perchloroethylene, 1,2-dichloroethane, chlorobenzene, bromobenzene, andchlorotoluene. Of those, toluene is preferred. Further, cyclohexane is also preferred as a solvent having no toxicity to a living body. The solvent may be used alone, or two or more thereof may be used in combination.

A polymerization temperature in the polymerization method of the present invention may be in the range of from -100°C to 100°C, preferably in the range of from -50°C to 80°C, for example. A polymerization time may be about 1 minute to 12 hours, preferably about 5 minutes to 5 hours. However, those reaction conditions may be suitably selected depending on the type of monomer and the type of catalyst composition, and are not limited to the ranges exemplified above. After the polymerization reaction reaches a predetermined polymerization degree, the reaction may be stopped by adding a known polymerization terminator to a polymerization system. A produced polymer may be separated from the reaction system in a conventional manner. A cis-configuration content in microstructure of the polymer of the present invention is generally 80.0 mol% or more, preferably 90.0 mol% or more, more preferably 95.0 mol% or more, and most preferably 98.5 mol% or more. A number average molecular weight is 100,000 to 500,000, preferably 150, 000 to 450,000, more preferably 200,000 to 400,000, most preferably 250,000 to 350,000. A molecular weight distribution Mw/Mn is 2.50 or less, preferably 2.20 or less, more preferably 2.00 or less. The polymer of present invention is expected to have superior thermal characteristics (thermal stability and the like) and mechanical characteristics (tensile modulus, bending modulus, and the like), and thus can be used for various applications as a polymeric material.

A polymer of the present invention has a high cis-configuration content in microstructure and has enhanced performance in thermal and mechanical characteristics. An improvement in a cis-configuration content of mere several % is very significant in industrial production of polymers.

A cis-configuration content in microstructure of a polymer of the present invention can be determined by analyzing the polymer through ¹H NMR and ¹³C NMR; and calculating the content from integration ratios of the obtained peaks.

### Examples

Hereinafter, the present invention will be explained more specifically with reference to examples. However, the scope of the present invention is not limited to the examples. A microstructure of polybutadiene referred to in the examples was calculated from integration ratios of peaks observed by ¹H NMR and ¹³C NMR [¹H NMR: δ4.8-5.0 (=CH₂ of 1,2-vinyl unit), 5.2-5.8 (-CH= of 1,4-unit and -CH=of 1,2-vinyl unit); ¹³C NMR: δ27.4 (1,4-cis unit), 32.7 (1,4-trans unit), 127.7-131.8 (1,4-unit), 113.8-114.8 and 143.3-144.7 (1,2-vinyl unit)]. A weight average molecular weight (Mw), a number average molecular weight (Mn), and a molecular weight distribution (Mw/Mn) were determined by GPC using polystyrene as a standard reference material.

### <Example 1>

0.01 mmol of bis[tetramethyl(isopropyl)cyclopentadienyl] (tetrahydrofuran) samarium [(C₅Me₄iPr)₂Sm(THF)] (iPr: an isopropyl group; and THF: a tetrahydrofuran ligand) was placed into a dry, degassed glass ampoule, and was dissolved in 5 ml of toluene. Then, 1 mmol of triisobutylaluminum (Tibal), 0.05 mmol of diisobutylaluminum hydride (Dibal-H), and MMAO (toluene-soluble aluminoxane sold by Tosoh Finechem Corporation) were placed into the ampoule so that an element ratio Al/Sm became 100, to thereby prepare a polymerization catalyst solution.

120 g of cyclohexane and 30 g of 1, 3-butadiene (1,3-BD) were placed into another dried, degassed pressure glass ampoule, and the aforementioned polymerization catalyst solution was further placed thereinto for polymerization at 50°C for 1 hour. After the polymerization, 10 ml of a methanol solution containing 10 wt% BHT [2,6-bis(t-butyl)-4-methylphenol] was added to stop the reaction. Polymers were separated by using a large volume of a methanol/hydrochloric acid mixed solvent and were dried at 60°C in a vacuum. Table 1 shows the composition of the catalyst composition, polymer yield, number average molecular weight, molecular weight distribution (Mw/Mn), and cis-1,4-configuration content (mol%).

### <Example 2>

Polymerization was carried out in the same manner as in Example 1 except that: the composition of the catalyst composition was changed to a molar ratio shown in Table 1; and 200 g of cyclohexane and 50 g of 1,3-butadiene were used. Table 1 shows the results.

### <Example 3>

Polymerization was carried out in the same manner as in Example 1 except that: the composition of the catalyst composition was changed to a molar ratio shown in Table 1; and 216 g of cyclohexane and 54 g of 1,3-butadiene were used. Table 1 shows the results.

### <Example 4>

Polymerization was carried out in the same manner as in Example 1 except that: the composition of the catalyst composition was changed to a molar ratio shown in Table 1; and 320 g of cyclohexane and 80 g of 1,3-butadiene were used. Table 1 shows the results.

### <Example 5>

Polymerization was carried out in the same manner as in Example 1 except that: bis[tetramethyl(trimethylsilyl)cyclopentadienyl] (tetrahydrofuran) samarium [(C₅Me₄TMS)₂Sm(THF)] (TMS: a trimethylsilyl group) was used; the composition of the catalyst composition was changed to a molar ratio shown in Table 1; and 360 g of cyclohexane and 90 g of 1, 3-butadiene were used. Table 1 shows the results.

### <Comparative Example 1>

Polymerization was carried out in the same manner as in Example 1 except that: the composition of the catalyst compositionwas changed to a molar ratio shown in Table 1; and 4 g of cyclohexane and 1 g of 1,3-butadiene were used. Table 1 shows the results.

### <Comparative Example 2>

Polymerization was carried out in the same manner as in Example 5 except that: the composition of the catalyst compositionwas changed to a molar ratio shown in Table 1; and 4 g of cyclohexane and 1 g of 1,3-butadiene were used. Table 1 shows the results.

### <Comparative Example 3>

Polymerization was carried out in the same manner as in Example 1 except that: the composition of the catalyst composition was changed to a molar ratio shown in Table 1; and 40 g of cyclohexane and 10 g of 1,3-butadiene were used. Table 1 shows the results.

### <Comparative Example 4>

Polymerization was carried out in the same manner as in Example 1 except that: the composition of the catalyst composition was changed to a molar ratio shown in Table 1; and 120 g of cyclohexane and 30 g of 1,3-butadiene were used. Table 1 shows the results.

### <Comparative Example 5>

Polymerization was carried out in the same manner as in Example 1 except that: the composition of the catalyst composition was changed to a molar ratio shown in Table 1; and 160 g of cyclohexane and 40 g of 1,3-butadiene were used. Table 1 shows the results.

**Table 1**

| | Examples | | | | | Comparative Examples | | | | |
|---|---|---|---|---|---|---|---|---|---|---|
| | 1 | 2 | 3 | 4 | 5 | 1 | 2 | 3 | 4 | 5 |
| 1,3-BD/Sm (g/mmol)*¹ | 3000 | 5000 | 5400 | 8000 | 9000 | 100 | 100 | 1000 | 3000 | 4000 |
| Al/Sm of Tibal (molar ratio)*² | 100 | 200 | 200 | 400 | 500 | | | | 200 | 400 |
| Al/Sm of Dibal-H (molar ratio)*³ | 5 | 5 | 25 | 15 | 30 | | | 15 | | |
| Al/Sm of MMAO-3A (molar ratio)*⁴ | 100 | 100 | 125 | 100 | 100 | 200 | 200 | 200 | 100 | 100 |
| Polymer yield (wt%) | 78 | 66 | 83 | 78 | 97 | 100 | 100 | 45 | 90 | 83 |
| Number average molecular weight (×10000) | 28.7 | 28.8 | 29.5 | 32.3 | 8.4 | 67.0 | 41.9 | 20.0 | 31.0 | 16.9 |
| Molecular weight distribution (Mw/Mn) | 1.95 | 1.72 | 1.81 | 1.96 | 1.94 | 1.99 | 1.89 | 1.77 | 2.81 | 2.82 |
| Cis-1,4-configuration content (mol%) | 98.5 | 98.7 | 99.1 | 99.1 | 99.0 | 98.9 | 98.4 | 98.3 | 98.3 | 98.2 |

| | | | | | | | | | | |
|---|---|---|---|---|---|---|---|---|---|---|
| *1) weight of 1,3-BD / moles of samarium complex | | | | | | | | | | |
| *2) moles of Tibal / moles of samarium complex | | | | | | | | | | |
| *3) moles of Dibal-H / moles of samarium complex | | | | | | | | | | |
| *4) moles of aluminum metal in MMAO-3A / moles of samarium metal in samarium complex | | | | | | | | | | |

### Industrial Applicability

Use of the catalyst composition of the present invention allows efficient production of a polymer having an extremely high cis-1,4-configuration content in microstructure, an appropriate molecular weight for easy processing, and a narrow molecular weight distribution with a small amount of the catalyst.

## Claims

1. A catalyst composition for polymerization of a conjugated diene, comprising:
(A) a metallocene-type complex of a rare earth metal compound;
(B) aluminoxane; and
(C) a combination of two or more organometallic compounds of group I to group III elements in a periodic table.

2. The catalyst composition according to claim 1, wherein the metallocene-type complex is a samarium complex.

3. The catalyst composition according to claim 1, wherein the organometallic compounds of group I to group III elements in aperiodic table are organoaluminum compounds.

4. The catalyst composition according to claim 1, wherein the combination of two or more organometallic compounds of group I to group III elements in a periodic table is a combination of one or two or more metal alkyl compounds and one or two or more metal alkyl hydrides.

5. The catalyst composition according to claim 1, wherein the combination of two or more organometallic compounds of group I to group III elements in a periodic table is a combination of triisobutylaluminum and diisobutylaluminum hydride.

6. The catalyst composition according to any one of claims 1 to 5, further comprising an ionic compound composed of a non-coordinating anion and a cation.

7. A co-catalyst used along with a polymerization catalyst for a conjugated diene containing a metallocene-type complex of a rare earth metal compound, comprising: aluminoxane; and a combination of two or more organometallic compounds of group I to group III elements in a periodic table.

8. A production method for a conjugated diene, comprising polymerizing a conjugated diene in the presence of the catalyst composition according to any one of claims 1 to 6.

9. A polymer which can be obtained by polymerization of a conjugated diene through the method according to claim 8.

10. The polymer according to claim 9, wherein: a cis-1,4-configuration content in microstructure of the polymer is 98.5 mol% or more; a number average molecular weight is 250,000 to 350,000; and a molecular weight distribution Mw/Mn is 2.00 or less.

11. A polymer of a conjugated diene, wherein: a cis-1,4-configuration content in microstructure of the polymer is 98.5 mol% or more; a number average molecular weight is 250,000 to 350,000; and a molecular weight distribution Mw/Mn is 2.00 or less.
